# EUROPEAN PATENT SPECIFICATION

(11) **EP 3 279 453 B1**
(45) Date of publication and mention of the grant of the patent: **18.09.2019**
(21) Application number: 16183061.7
(22) Date of filing: 05.08.2016
(51) Int. Cl.: F02D 19/10, F02D 19/06, F02D 41/40, F02D 41/00, F02D 41/22

(54) **METHOD FOR TESTING AN IGNITION DEVICE OF AN INTERNAL COMBUSTION ENGINE**
VERFAHREN ZUM TESTEN EINER ZÜNDVORRICHTUNG EINER BRENNKRAFTMASCHINE
PROCÉDÉ DE TEST D'UN DISPOSITIF D'ALLUMAGE D'UN MOTEUR À COMBUSTION INTERNE

(43) Date of publication of application: 07.02.2018
(73) Proprietor: Caterpillar Motoren GmbH & Co. KG, 24159 Kiel (DE)
(72) Inventor: Chakrabarty, Aradhita Subirkumar, Peterborough, PE1 4BD (GB); Sixel, Eike Joachim, 24109 Kiel (DE); Schmidt, Andre, 18147 Rostock (DE); Stubbs, Adam, Lincolnshire, PE6 8NF (GB); Marscheider, Hannes, 24790 Schülldorf (DE); Wester, Daniel, 24242 Felde (DE)
(74) Representative: BRP Renaud & Partner mbB Rechtsanwälte Patentanwälte Steuerberater

(56) References cited:
- EP-A1- 2 562 399
- EP-A1- 2 806 145
- DE-A1-102008 004 078

## Description

### Technical Field

The present disclosure generally relates to an internal combustion engine and a method of operating the same, in particular, to a method of testing an ignition device of an internal combustion engine such as a gas or dual fuel engine.

### Background

Generally, during operation of a dual fuel engine in gas mode, a mixture of gaseous fuel and air is ignited by injecting a pilot injection of liquid fuel at a predetermined injection timing. The pilot injection is supplied by a pilot injector configured to supply a small amount of liquid fuel, for example, at a predetermined crank angle before the top dead center position of the piston of the associated cylinder.

When starting operation of the engine in the gas mode, one or more of the injectors of the same may be damaged or clogged. This may result in the one or more injectors malfunctioning and failing to supply the liquid fuel injection. Accordingly, the mixture of gaseous fuel and air in the associated cylinder may not be combusted. This mixture of gaseous fuel and air enters the exhaust system of the engine, where explosions may occur due to the high temperatures present in the exhaust system.

Therefore, it is necessary to check whether an ignition system of the dual fuel engine is fully functional prior to switching from liquid fuel operation to gas operation. In particular, classification societies such as the Marine Classification Society (MCS) may require that procedures for checking the ignition system of the engine are implemented, in particular, in case of marine applications.

DE 10 2008 007 325 A1 discloses a method of testing pilot fuel injectors by shifting an injection timing and/or an ignition timing.

DE 10 2008 004 078 A1 discloses a method for testing an ignition device associated with a cylinder of an internal combustion engine, the ignition device being configured to supply a pilot injection of liquid fuel to the cylinder to cause an ignition of a mixture of gaseous fuel and air in a combustion chamber of the cylinder, the method comprises: operating the internal combustion engine with a first pilot injection timing of the ignition device, retarding the pilot injection timing to operate the internal combustion engine with a second pilot injection timing of the ignition device that is later than the first pilot injection timing, measuring at least one combustion parameter while operating with the second pilot injection timing, advancing the pilot injection timing to operate the internal combustion engine with a third pilot injection timing of the ignition device that is earlier than the first pilot injection timing, measuring the at least one combustion parameter while operating with the third pilot injection timing, comparing the measurement of the at least one parameter for the second pilot injection timing with the measurement of the at least one parameter for the third pilot injection timing, and determining whether the ignition device is functional based on the comparison.

The present disclosure is directed, at least in part, to improving or overcoming one or more aspects of prior systems.

### Summary of the Disclosure

According to one aspect of the present disclosure, a method for testing an ignition device associated with a cylinder of an internal combustion engine in accordance with claim 1 is provided.

According to another aspect of the present disclosure, an internal combustion engine includes the features of claim 14.

According to a further aspect of the present disclosure, a computer program comprises computer-executable instructions which, when run on a computer, cause the computer to perform the steps of the method according to the above aspect.

Other features and aspects of the present disclosure will be apparent from the following description and the accompanying drawings.

### Brief Description of the Drawings

Fig. 1 is a schematic view of an exemplary internal combustion engine in accordance with the present disclosure;
Fig. 2 is a schematic view of a control system for testing an ignition device associated with a cylinder of the internal combustion engine of Fig. 1 in accordance with the present disclosure; and
Fig. 3 is a schematic diagram illustrating injection timings and corresponding injection amounts in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based on the realization that the health of an ignition device, which is a pilot injector used in a dual fuel engine or a diesel gas engine, is determined based on varying the injection timing of the pilot injector. In particular, the present disclosure is based on the realization of that, by first retarding the injection timing to a timing that is later than the injection timing of a main injection system of a dual fuel engine, and subsequently advancing the injection timing to a timing that is earlier than the injection timing of the main injection system, it can be reliably determined whether the injector is functioning normally or not. In particular, the present disclosure is based on the realization that, by measuring a combustion parameter for the different ignition timings, different behaviors can be detected if the injector is functioning normally.

In addition, the present disclosure is based on the realization that the parameter that is used to determine the health of the injector is obtained based on measurements performed with the cylinder pressure sensor system provided for the engine. The parameters that are used and obtained based on said cylinder pressure measurements are the start of combustion (SOC), the peak firing pressure, the duration of combustion and a cylinder pressure at a predetermined timing, for example, before the injection timing of the main injection system.

In addition, the present disclosure may be based on the realization that the determination of the different behaviors for the retarded injection timing and the advanced injection timing can be facilitated by increasing the amount of injected pilot fuel when the advanced injection timing is used. In addition, the determination can be facilitated when the associated injection timing is advanced as much as possible, i.e., significantly earlier than the injection timing that is used during normal operation of the engine in the liquid fuel mode.

In addition, the present disclosure may be based on the realization that a change of a level of the parameter that is used can be observed, and it can be determined that the pilot injector is functional when the absolute value of the change is above a predetermined threshold. Likewise, it can be determined that the injector is malfunctioning when the absolute value is below the threshold.

The present disclosure may also be based on the realization that testing of the injector can be performed simultaneously for all cylinders of the engine, or separately for each cylinder or different groups of cylinders. In this respect, it has been realized that the determination of the change in the level of the parameter becomes easier when the injector injects as much pilot fuel as possible when using the advanced injection timing. Therefore, the test routine that is used may be adapted depending on the available amount of pilot fuel for all cylinders, for example, based on an available output of an associated fuel pump or a rail pressure.

Finally, the present disclosure may be based in part on the realization that the method of testing the health of an injector may also be used for gas engines that operate with gaseous fuel and use a pilot injection of liquid fuel, for example, diesel fuel, as an ignition source. In this case, the health of the injectors of the gas engine may be determined at a beginning of the start of the engine prior to the activation of the gas supply system by performing the method disclosed herein.

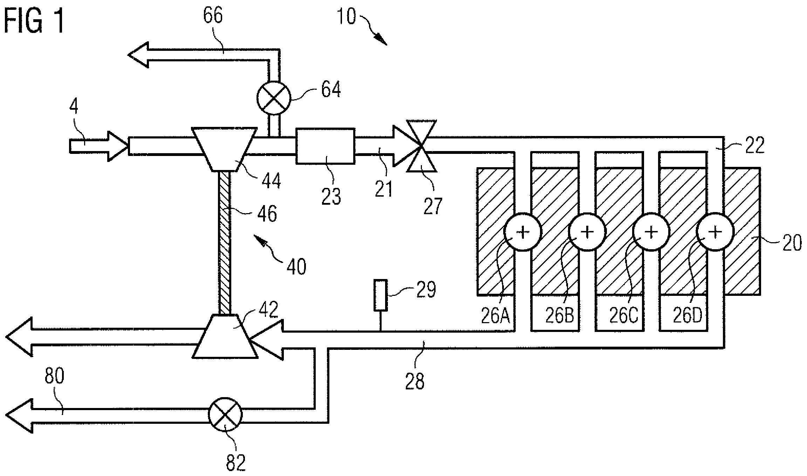

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. In the embodiment, internal combustion engine 10 is a dual fuel engine. One skilled in the art will recognize, however, that internal combustion engine 10 may be any type of internal combustion engine, for example, a diesel gas engine, that utilizes a pilot injector that injects liquid fuel to ignite a mixture of gaseous fuel and air for combustion.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, a gaseous fuel supply (not shown), a liquid fuel tank (not shown), a turbocharger 40 associated with cylinders 26A-26D, and an intake manifold 22.

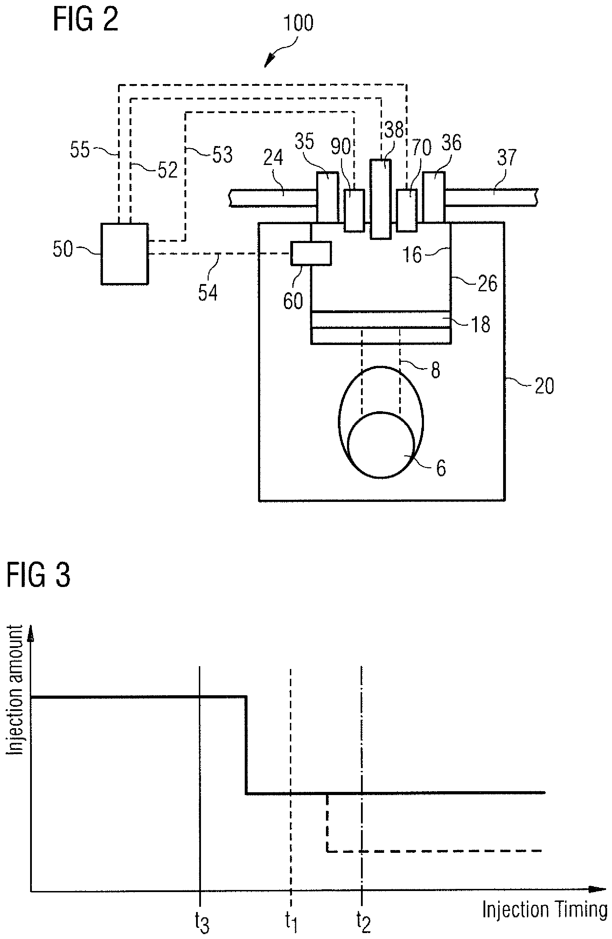

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is at least temporarily fluidly connected to each of cylinders 26A-26D. Each of cylinders 26A-26D is provided with at least one inlet valve 35 (see Fig. 2) that is adapted to open or close a fluid connection between an intake passage 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated in gas mode, a mixture of gaseous fuel and air (in the following referred to as the "mixture") is introduced into the combustion chambers of the plurality of cylinders 26A-26D via an air inlet 4, intake manifold 22, inlet valves 35, which supply compressed intake air, and gas admission valves 38 (see Fig. 2), which supply gaseous fuel. After combustion, exhaust gases generated by the combustion process are released from cylinders 26A-26D through exhaust manifold 28. When internal combustion engine 10 is operated in liquid fuel mode, liquid fuel is introduced into the combustion chambers of the plurality of cylinders 26A-26D via a main injector 70 (see Fig. 2). The ignition of the main liquid fuel may be assisted by supplying a pilot injection of liquid fuel via a pilot injector that serves as an ignition device 90 (see Fig. 2) in the gas mode.

An exhaust sensor 29 may be disposed in exhaust manifold 28 to detect a component of the exhaust from internal combustion engine 10. In the exemplary embodiment described herein, exhaust gas sensor may be a NOx sensor configured to detect an amount of NOx in the exhaust from internal combustion engine 10.

Turbocharger 40 is configured to use the heat and pressure of the exhaust gas of internal combustion engine 10 to drive a compressor 44 for compressing the intake air prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the compressed intake air from compressor connection 21 into intake manifold 22.

During operation of internal combustion engine 10 in gas mode, the intake air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, for example, by using ignition device 90 for supplying a pilot injection of liquid fuel to initiate the combustion of the mixture at a predetermined injection timing. It should be noted that herein the term "injection timing" is used for the timing of the start of injection of the pilot fuel by the ignition device 90. The produced exhaust gas is discharged via exhaust manifold 28. An outlet of exhaust manifold 28 is fluidly connected to an inlet of turbine 42. An outlet of turbine 42 may be fluidly connected to, for example, an exhaust gas treatment system (not shown).

Additionally, as indicated in Fig. 1, internal combustion engine 10 may be provided with a waste gate system including a waste gate connection 80 and a waste gate valve 82. Further, internal combustion engine 10 may include a blow-off system including a blow-off connection 66 and a blow-off valve 64. It should be appreciated that blow-off connection 66 and blow-off valve 64 may be provided with different configurations than the one shown in Fig. 1, if appropriate. Alternatively, one or more of these components may be omitted.

Turning now to Fig. 2, an exemplary embodiment of a control system 100 for testing an ignition device associated with each of cylinders 26A-26D of gaseous fuel engine 10 is illustrated. The person skilled in the art will recognize that the exemplary cylinder 26 shown in Fig. 2 demonstrates the principles of the cylinders 26A-26D of Fig. 1. Therefore, the exemplary disclosed configuration shown in Fig. 2 also applies to the cylinders 26A-26D shown in Fig. 1.

Fig. 2 shows a schematic cross-sectional view of cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37. Gas admission valve 38 is provided to supply gaseous fuel to combustion chamber 16 of cylinder 26 in the gas mode. In the exemplary embodiment, gas admission valve 38 may be a solenoid-operated gas admission valve (SOGAV). Liquid fuel main injector 70 is provided to supply a main liquid fuel injection to combustion chamber 16 of cylinder 26 in the liquid fuel mode. For example, main injector 70 may be configured to receive a desired amount of liquid fuel from a fuel pump (not shown) associated with cylinder 26, and to inject the received liquid fuel at a desired main injection timing.

Inlet valve 35 is configured to supply compressed intake air to combustion chamber 16. Exhaust valve 36 is configured to discharge exhaust from combustion chamber 16 to exhaust manifold 28 after combustion.

Ignition device 90 is configured to ignite the mixture of gaseous fuel and air (when operating in gas mode) or to improve the combustion of main liquid fuel, for example, diesel fuel (when operating in liquid fuel mode) inside combustion chamber 16 at a desired ignition timing. In the embodiments, ignition device 90 is a pilot injector configured to inject a pilot amount of, for example, diesel fuel to ignite the mixture of gaseous fuel and air in the gas mode. Ignition device 90 may further be used to inject a pilot amount of liquid fuel in the liquid fuel mode, for example, to assist the combustion of the main liquid fuel injected by liquid fuel main injector 70. In some exemplary embodiments, a pre-combustion chamber (not shown) may be provided in combustion chamber 16, and ignition device 90 may be configured to ignite a small amount of fuel supplied to the pre-combustion chamber in order to initiate the combustion of the mixture of fuel and air in combustion chamber 16.

Control system 100 includes a sensor 60 associated with cylinder 26. Sensor 60 is disposed within the combustion chamber 16. In other exemplary embodiments, sensor 60 may be disposed outside of combustion chamber 16. Sensor 60 is configured to detect a parameter of the combustion in cylinder 26. The sensor 60 is a pressure sensor configured to detect a cylinder pressure in cylinder 26. Sensor 60 is any known pressure sensor and is configured to detect the pressure within combustion chamber 16 in a known manner. In other embodiments, sensor 60 may be configured to detect temperature fluctuations within combustion chamber 16 or other parameters from which characteristics of the combustion in combustion chamber 16 can be derived. For example, sensor 60 may be an impact sound sensor configured to detect an impact sound propagating in engine block 20 during combustion in combustion chamber 16.

Control system 100 further includes a control unit 50. Control unit 50 is connected to sensor 60 via a communication line 54 and to gas admission valve 38 via a communication line 52. Control unit 50 is further connected to ignition device 90 via a communication line 53 and to main injector 70 via a communication line 55. Control unit 50 is configured to control an ignition timing of the mixture in combustion chamber 16 via ignition device 90. Further, control unit 50 is configured to receive the results of the detection by sensor 60 and determine at least one characteristic of the combustion in combustion chamber 16 from the received detection results.

Control unit 50 may be a single microprocessor or dual microprocessors that include means for controlling, among others, an operation of various components of combustion engine 10. Control unit 50 may be a general engine control unit (ECU) capable of controlling internal combustion engine 10 and/or its associated components. Control unit 50 may include all components required to run an application such as, for example, a memory, a secondary storage device, and a processor such as a central processing unit or any other means known in the art for controlling internal combustion engine 10 and its components. Various other known circuits may be associated with control unit 50, including power supply circuitry, signal conditioning circuitry, communication circuitry and other appropriate circuitry. Control unit 50 may analyze and compare received and stored data and, based on instructions and data stored in memory or input by a user, determine whether action is required. For example, control unit 50 may compare received values with target values stored in memory, and, based on the results of the comparison, transmit signals to one or more components to alter the operation status of the same.

Control unit 50 may include any memory device known in the art for storing data relating to operation of internal combustion engine 10 and its components. The data may be stored in the form of one or more maps that describe and/or relate, for example, the detection results from sensor 60 to the start of combustion in combustion chamber 16. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Control unit 50 may reference these maps and control operation of one component in response to the desired operation of another component.

In the embodiment, control unit 50 is configured to determine a health of ignition device 90 prior to switching the operation of internal combustion engine 10 from the liquid fuel mode to the gas mode. In particular, control unit 50 is configured to operate internal combustion engine 10 with a first pilot injection timing of ignition device 90 during normal operation of internal combustion engine 10 in the liquid fuel mode. It will be appreciated that, in some embodiments, the first pilot injection timing may be controlled based on operating parameters of the engine, for example, an engine load, to achieve desired combustion characteristics of internal combustion engine 10.

When it is determined that internal combustion engine 10 is to be switched to the gas mode, for example, due to entering an emission controlled area or a harbor, bunkering gaseous fuel, varying engine loads or the like, control unit 50 is configured to retard the pilot injection timing to operate internal combustion engine 10 with a second pilot injection timing of ignition device 90 that is later than the first pilot injection timing. For example, control unit 50 may be configured to shift the injection timing from a first injection timing t₁ to a later injection timing t₂, as shown in Fig. 3. For example, second injection timing t₂ may be between around 0.1° and 40° crank angle after a timing of a main liquid fuel injection in the liquid fuel mode, preferably between around 1° and 10° crank angle after the timing of the main liquid fuel injection. Alternatively, second injection timing t₂ may be between around 0.1° and 40° crank angle after first injection timing t₁, preferably between around 1° and 10° crank angle after first injection timing t₁. In some embodiments, control unit 50 may also be configured to reduce the amount of injected pilot fuel when internal combustion engine 10 is operated with second injection timing t₂, as shown by the dashed line in Fig. 3.

In this state, with internal combustion engine 10 operating in the liquid fuel mode with second injection timing t₂, control unit 50 may receive the detection signals from sensor 60, for example, cylinder pressure measurement signals. Based on the received cylinder pressure measurement signals, control unit 50 determines at least one combustion parameter of cylinder 26. The control unit 50 is configured to determine a start of combustion (SOC) based on the cylinder pressure measurements by sensor 60 or the control unit 50 is configured to determine or calculate a peak Firing pressure, a duration of combustion and a cylinder pressure at a predetermined time before or after the injection of the main liquid fuel based on the measurement signals received from sensor 60. in some embodiments, control unit 50 may be configured to determine or calculate the combustion parameter over a predetermined number of combustion cycles of cylinder 26, and to calculate an average of the combustion parameter over the cycles as the combustion parameter. The combustion parameter determined in this manner is then stored in the memory of control unit 50 or any other memory associated with the same.

After the combustion parameter has been determined for the engine operating with the second pilot injection timing t₂, control unit 50 is configured to advance the pilot injection timing to an earlier injection timing t₃, as shown in Fig. 3, to operate internal combustion engine 10 with a third pilot injection timing of ignition device 90 that is earlier than first pilot injection timing t₁. In some embodiments, control unit 50 is configured to advance the injection timing to a third injection timing t₃ that is between around 0.1° and 40° crank angle before the timing of the main liquid fuel injection in the liquid fuel mode, preferably between around 2° and 10° crank angle before the timing of the main liquid fuel injection. In other embodiments, control unit 50 may be configured to advance the injection timing to a third injection timing that is between around 0.1° and 40° crank angle before first injection timing t₁, preferably between around 1° and 5° crank angle before the first injection timing t₁. In addition, control unit 50 may be configured to increase the amount of injected pilot fuel when internal combustion engine 10 is operated with third injection timing t₃, as shown by the solid line in Fig. 3. This may allow a better differentiation between the levels of the combustion parameter for the two injection timings t₂ and t₃, as will be described in more detail below.

While internal combustion engine 10 is operating with third injection timing t₃, control unit 50 determines the above-mentioned combustion parameter in the above-described manner, and stores the same in the memory associated with control unit 50.

Then, control unit 50 compares the measurement of the at least one combustion parameter for the second pilot injection timing with the measurement of the same for the third pilot injection timing. For example, control unit 50 may determine a level or an absolute value of the at least one measured parameter, and determine a change of the level or absolute value, for example, by subtracting the two quantities. The resulting change of the level or absolute value of the at least one measured parameter may then be compared to a first threshold. Control unit 50 may determine that ignition device 90 is functional based on the comparison, for example, control unit 50 may determine that ignition device 90 is functional when an absolute value of the change in the measured parameter is above the first threshold.

It will be readily appreciated that, in other embodiments, control unit 50 may determine that the pilot injection device is functional in a different manner, for example, using a plurality of thresholds and determining that the ignition device 90 is functional when the absolute value of the change lies between two thresholds, or by comparing the absolute value of the change with an expected value of the change that may be obtained in advance for particular operating parameters of internal combustion engine 10 and particular ignition devices, for example, during testing of internal combustion engine 10. When control unit 50 determines that ignition device 90 is functional based on the above-described measurements and comparisons, control unit 50 may then initiate switching of the operating mode of internal combustion engine 10 from the liquid fuel mode to the gas mode, without any risk of negatively affecting the operation of internal combustion engine 10 due to a defective ignition device.

As described above, the amount of change in the measured parameter should be as large as possible when operating internal combustion engine 10 with injection timings t₂ and t₃, respectively, to facilitate reliable identification of a change in the parameter. To achieve this object, control unit 50 may be configured to maximize the amount of pilot fuel that is injected at third ignition timing t₃. In some embodiments, control unit 50 may therefore be configured to select different cylinders of the plurality of cylinders 26A-26D of internal combustion engine 10 (see Fig. 1) and perform the above-described method of determining the health of the associated injectors in sequence for different cylinders.

For example, when control unit 50 determines that the power of the associated fuel pump or the common rail pressure is sufficient to supply the desired amount of pilot liquid fuel to all ignition devices 90 at the same time, control unit 50 may be configured to perform the test simultaneously for all cylinders 26A-26D.

On the other hand, when control unit 50 determines that the available amount of pilot fuel for cylinders 26A-26B is not sufficient to assure reliable detection of the change in the combustion parameter, control unit 50 may select a first cylinder or a group of first cylinders, perform the test for the selected cylinder(s), stop the supply of pilot fuel to the previously selected cylinder(s), and then perform the test for the remaining cylinder(s). In this manner, it can be assured that it can be reliably determined for each individual cylinder whether the associated ignition device 90 is functioning normally. In case it is determined that all injection devices are functioning normally, internal combustion engine 10 may be switched to the gas mode as described above.

### Industrial Applicability

The industrial applicability of the systems and methods for checking the ignition system in a gas or dual fuel internal combustion engine described herein will be readily appreciated from the foregoing discussion. An exemplary machine suited to the disclosure is a large internal combustion engine such as the engines of the series M46DF, M43DF, GCM46, GCM34, M32DF, M34DF, M27DF, M3x manufactured by Caterpillar Motoren GmbH & Co. KG, Kiel, Germany. Similarly, the systems and methods described herein can be adapted to a large variety of other gas or dual fuel engines used for various different tasks.

With the system of the present disclosure, it is possible to reliably determine the health of the pilot injectors of a dual fuel engine prior to switching the engine from the liquid fuel mode to the gas mode.

However, although in the embodiment the method was applied to a dual fuel engine, in other embodiments, the method may also be applied to a gas engine such as a diesel gas engine. Such a diesel gas engine may also use ignition device 90 to ignite a mixture of gaseous fuel and air in combustion chamber 16 of each cylinder 26.

For example, it may be desirable to check at regular intervals during operation of the diesel gas engine whether all injection devices are functional. This may be achieved by performing the above-described method during operation of the gas engine, for example, in sequence for one or more selected cylinders. For example, control unit 50 may be configured to first retard and then advance the pilot injection timing for a selected cylinder, while continuing to operate the remaining cylinders with the normal pilot injection timing. Control unit 50 may then determine whether the selected cylinder has a functional injection device.

Although the present embodiment has been described as using the cylinder pressure sensor 60 associated with each cylinder or the pluralities of cylinders of internal combustion engine 10 in order to determine the at least one combustion parameter, in other embodiments, different components of internal combustion engine 10 may be used to determine said parameter. For example, it may be possible to use the exhaust gas temperature measured by exhaust sensor 29 to derive the parameter. Here, it may also be possible to perform the test for all cylinders simultaneously, or in sequence for a selected number of cylinders, for example, separately for each individual cylinder.

It will be appreciated that it is not necessary to perform the method disclosed herein in the order described above, i.e., by first retarding the injection timing and then advancing the same. In some embodiments, the injection timing may be advanced first, the parameter may be measured, and then the injection timing may be retarded to perform another measurement of the parameter.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method for testing an ignition device (90) associated with a cylinder (26) of an internal combustion engine (10), the ignition device (90) being configured to supply a pilot injection of liquid fuel to the cylinder (26) to cause an ignition of a mixture of gaseous fuel and air in a combustion chamber (16) of the cylinder (26), the method comprising:
operating the internal combustion engine (10) with a first pilot injection timing (ti) of the ignition device (90), the injection timing being the timing of the start of injection of the pilot fuel by the ignition device (90);
retarding the pilot injection timing to operate the internal combustion engine (10) with a second pilot injection timing (t₂) of the ignition device (90) that is later than the first pilot injection timing;
measuring at least one combustion parameter while operating with the second pilot injection timing, the at least one combustion parameter being obtained based on measurements performed with a cylinder pressure sensor system provided for the engine and being at least one of: a start of combustion in the cylinder (26), a peak firing pressure in the cylinder (26), a duration of combustion and a cylinder pressure measured at a predetermined timing before or after a main injection timing;
advancing the pilot injection timing to operate the internal combustion engine (10) with a third pilot injection timing (t₃) of the ignition device (90) that is earlier than the first pilot injection timing;
measuring the at least one combustion parameter while operating with the third pilot injection timing;
comparing the measurement of the at least one combustion parameter for the second pilot injection timing (t₂) with the measurement of the at least one combustion parameter for the third pilot injection timing (t₃); and
determining whether the ignition device (90) is functional based on the comparison.

2. The method of claim 1, wherein the internal combustion engine (10) is a dual fuel engine configured to operate in a gas mode and a liquid fuel mode, the method including:
operating the internal combustion engine (10) with the first to third pilot injection timings of the ignition device (90) in the liquid fuel mode; and
switching to the gas mode when it is determined that the ignition device (90) is functional.

3. The method of claim 2, wherein the second injection timing (t₂) is an injection timing that is later than an injection timing of a main liquid fuel injection when the internal combustion engine (10) is operating in the liquid fuel mode.

4. The method of claim 3, wherein the second injection timing (t₂) is between around 0.1° and 40° crank angle after the timing of the main liquid fuel injection, preferably between around 1° and 10° crank angle after the timing of the main liquid fuel injection.

5. The method of any one of claims 2 to 4, wherein the third injection timing (t₃) is an injection timing that is earlier than an injection timing of a main liquid fuel injection when the internal combustion engine (10) is operating in the liquid fuel mode.

6. The method of claim 5, wherein the third injection timing (t3) is between around 0.1° and 40° crank angle before the timing of the main liquid fuel injection, preferably between around 2° and 10° crank angle before the timing of the main liquid fuel injection.

7. The method of claim 1, wherein the internal combustion engine (10) is a gas engine configured to operate with a pilot injection of liquid fuel, for example, diesel fuel, the method including:
performing the steps of the method of claim 1 at the beginning of a start of the engine (10) prior to activating a gas supply of the same.

8. The method of any one of claims 1 to 7,
wherein the second injection timing (t₂) is between around 0° and 40° crank angle after the first injection timing, preferably between around 1° and 10° crank angle after the first injection timing, and/or
wherein the third injection timing (t₃) is between around 0.1° and 40° crank angle before the first injection timing, preferably between around 1° and 5° crank angle before the first injection timing.

9. The method of any one of claims 1 to 8, further comprising:
increasing the amount of injected pilot liquid fuel, preferably to a maximum capacity of the ignition device (90), when the internal combustion engine (10) is operating with the third injection timing (t₃).

10. The method of any one of claims 1 to 9, further comprising:
determining a change of a level of the at least one measured combustion parameter; and
determining that the ignition device (90) is functional when an absolute value of the change is above a first threshold, lies between a second threshold and a third threshold, and/or differs by less than a predetermined amount from an expected value of the change obtained in advance for specific operating parameters of the engine (10) and/or a specific type of injection device (90).

11. The method of any one of claims 1 to 10, wherein the at least one measured combustion parameter is measured on a cycle by cycle basis or averaged over multiple cycles.

12. The method of any one of claims 1 to 11, wherein the internal combustion engine (10) includes a plurality of cylinders (26A-26D), the method including:
selecting at least one first cylinder of the plurality of cylinders (26A-26D) and performing the method of any one of claims 1 to 11 for the at least one first cylinder; and
selecting at least one second cylinder of the plurality of cylinders (26A-26D) that is different from the at least one first cylinder and performing the method of any one of claims 1 to 11 for the at least one second cylinder after performing the method for the at least one first cylinder,
preferably repeating the process until all cylinders (26A-26D) have been tested.

13. The method of any one of claims 1 to 11, wherein the internal combustion engine (10) includes a plurality of cylinders (26A-26D), the method including:
simultaneously performing the method of any one of claims 1 to 11 for the plurality of cylinders (26A-26D).

14. An internal combustion engine (10), comprising:
an engine block (20) defining at least in part a cylinder (26);
an ignition device (90) configured to supply a pilot injection of liquid fuel to the cylinder (26) to cause an ignition of a mixture of gaseous fuel and air in a combustion chamber (16) of the cylinder (26);
a cylinder pressure sensor system configured to detect a cylinder pressure in the cylinder (26); and
a control unit (50) configured to:
operate the internal combustion engine (10) with a first pilot injection timing (t₁) of the ignition device (90), the injection timing being the timing of the start of injection of the pilot fuel by the ignition device (90);
retard the pilot injection timing to operate the internal combustion engine (10) with a second pilot injection timing (t₂) of the ignition device (90) that is later than the first pilot injection timing;
measure at least one combustion parameter while operating with the second pilot injection timing, the at least one combustion parameter being obtained based on measurements performed with the cylinder pressure sensor system and being at least one of: a start of combustion in the cylinder (26), a peak firing pressure in the cylinder (26), a duration of combustion and a cylinder pressure measured at a predetermined timing before or after a main injection timing;
advance the pilot injection timing to operate the internal combustion engine (10) with a third pilot injection timing (t₃) of the ignition device (90) that is earlier than the first pilot injection timing;
measure the at least one combustion parameter while operating with the third pilot injection timing;
compare the measurement of the at least one combustion parameter for the second pilot injection timing (t₂) with the measurement of the at least one combustion parameter for the third pilot injection timing (t₃); and
determine whether the ignition device (90) is functional based on the comparison.

15. A computer program comprising computer-executable instructions which, when run on a computer, cause the computer to perform the steps of the method of any one of claims 1 to 13.

## Patentansprüche

1. Verfahren zum Prüfen einer Zündvorrichtung (90), die einem Zylinder (26) eines Verbrennungsmotors (10) zugeordnet ist, wobei die Zündvorrichtung (90) konfiguriert ist, dem Zylinder (26) eine Voreinspritzung von Flüssigkraftstoff zuzuführen, um eine Zündung eines Gemisches von gasförmigem Kraftstoff und Luft in einer Brennkammer (16) des Zylinders (26) zu bewirken, wobei das Verfahren Folgendes umfasst:
Betreiben des Verbrennungsmotors (10) mit einem ersten Voreinspritzzeitpunkt (t₁) der Zündvorrichtung (90), wobei der Einspritzzeitpunkt der Zeitpunkt des Einspritzbeginns des Vorkraftstoffs durch die Zündvorrichtung (90) ist;
Verzögern des Voreinspritzzeitpunkts, um den Verbrennungsmotor (10) mit einem zweiten Voreinspritzzeitpunkt (t₂) der Zündvorrichtung (90) zu betreiben, der später als der erste Voreinspritzzeitpunkt ist;
Messen mindestens eines Verbrennungsparameters während des Betriebs mit dem zweiten Voreinspritzzeitpunkt, wobei der mindestens eine Verbrennungsparameter basierend auf Messungen erhalten wird, die mit einem für den Motor bereitgestellten Zylinderdrucksensorsystem ausgeführt werden, und mindestens eines der Folgenden ist: ein Verbrennungsbeginn im Zylinder (26), ein Spitzenzünddruck im Zylinder (26), eine Verbrennungsdauer und ein Zylinderdruck, der zu einem vorbestimmten Zeitpunkt vor oder nach einem Haupteinspritzzeitpunkt gemessen wird;
Verfrühen des Voreinspritzzeitpunkts, um den Verbrennungsmotor (10) mit einem dritten Voreinspritzzeitpunkt (t₃) der Zündvorrichtung (90) zu betreiben, der früher als der erste Voreinspritzzeitpunkt ist;
Messen des mindestens einen Verbrennungsparameters während des Betriebs mit dem dritten Voreinspritzzeitpunkt;
Vergleichen des Messwerts des mindestens einen Verbrennungsparameters für den zweiten Voreinspritzzeitpunkt (t₂) mit dem Messwert des mindestens einen Verbrennungsparameters für den dritten Voreinspritzzeitpunkt (t₃); und
Bestimmen, ob die Zündvorrichtung (90) basierend auf dem Vergleich funktionsfähig ist.

2. Verfahren nach Anspruch 1, wobei der Verbrennungsmotor (10) ein Zweistoffmotor ist, der zum Betreiben in einem Gasmodus und einem Flüssigkraftstoffmodus konfiguriert ist, wobei das Verfahren Folgendes umfasst:
Betreiben des Verbrennungsmotors (10) mit den ersten bis dritten Voreinspritzzeitpunkten der Zündvorrichtung (90) im Flüssigkraftstoffmodus; und
Umschalten in den Gasmodus, wenn bestimmt wird, dass die Zündvorrichtung (90) funktionsfähig ist.

3. Verfahren nach Anspruch 2, wobei der zweite Einspritzzeitpunkt (t₂) ein Einspritzzeitpunkt ist, der später als ein Einspritzzeitpunkt einer Hauptflüssigkraftstoffeinspritzung ist, wenn der Verbrennungsmotor (10) im Flüssigkraftstoffmodus betrieben wird.

4. Verfahren nach Anspruch 3, wobei der zweite Einspritzzeitpunkt (t₂) zwischen etwa 0,1° und 40° Kurbelwinkel nach dem Zeitpunkt der Hauptflüssigkraftstoffeinspritzung, vorzugsweise zwischen etwa 1° und 10° Kurbelwinkel nach dem Zeitpunkt der Hauptflüssigkraftstoffeinspritzung, liegt.

5. Verfahren nach einem der Ansprüche 2 bis 4, wobei der dritte Einspritzzeitpunkt (t₃) ein Einspritzzeitpunkt ist, der früher als ein Einspritzzeitpunkt einer Hauptflüssigkraftstoffeinspritzung ist, wenn der Verbrennungsmotor (10) im Flüssigkraftstoffmodus betrieben wird.

6. Verfahren nach Anspruch 5, wobei der dritte Einspritzzeitpunkt (t₃) zwischen etwa 0,1° und 40° Kurbelwinkel vor dem Zeitpunkt der Hauptflüssigkraftstoffeinspritzung, vorzugsweise zwischen etwa 2° und 10° Kurbelwinkel vor dem Zeitpunkt der Hauptflüssigkraftstoffeinspritzung, liegt.

7. Verfahren nach Anspruch 1, wobei der Verbrennungsmotor (10) ein Gasmotor ist, der zum Betreiben mit einer Voreinspritzung von Flüssigkraftstoff, zum Beispiel Dieselkraftstoff, konfiguriert ist, wobei das Verfahren Folgendes umfasst:
Ausführen der Schritte des Verfahrens nach Anspruch 1 am Beginn eines Starts des Motors (10) vor dem Aktivieren einer Gaszufuhr desselben.

8. Verfahren nach einem der Ansprüche 1 bis 7,
wobei der zweite Einspritzzeitpunkt (t₂) zwischen etwa 0° und 40° Kurbelwinkel nach dem ersten Einspritzzeitpunkt, vorzugsweise zwischen etwa 1° und 10° Kurbelwinkel nach dem ersten Einspritzzeitpunkt, liegt, und/oder
wobei der dritte Einspritzzeitpunkt (t₃) zwischen etwa 0,1° und 40° Kurbelwinkel vor dem ersten Einspritzzeitpunkt, vorzugsweise zwischen etwa 1° und 5° Kurbelwinkel vor dem ersten Einspritzzeitpunkt, liegt.

9. Verfahren nach einem der Ansprüche 1 bis 8, ferner umfassend:
Erhöhen der Menge von eingespritztem Vor-Flüssigkraftstoff, vorzugsweise bis zu einer maximalen Kapazität der Zündvorrichtung (90), wenn der Verbrennungsmotor (10) mit dem dritten Einspritzzeitpunkt (t₃) betrieben wird.

10. Verfahren nach einem der Ansprüche 1 bis 9, ferner umfassend:
Bestimmen einer Änderung einer Höhe des mindestens einen gemessenen Verbrennungsparameters; und
Bestimmen, dass die Zündvorrichtung (90) funktionsfähig ist, wenn ein absoluter Wert der Änderung über einem ersten Schwellenwert ist, zwischen einem zweiten Schwellenwert und einem dritten Schwellenwert liegt, und/oder um weniger als einen vorbestimmten Betrag von einem erwarteten Wert der Änderung, die im Voraus für bestimmte Betriebsparameter des Motors (10) und/oder eine bestimmte Art von Einspritzvorrichtung (90) erhalten wird, abweicht.

11. Verfahren nach einem der Ansprüche 1 bis 10, wobei der mindestens eine gemessene Verbrennungsparameter jeweils pro Zyklus gemessen wird oder über mehrere Zyklen gemittelt wird.

12. Verfahren nach einem der Ansprüche 1 bis 11, wobei der Verbrennungsmotor (10) eine Vielzahl von Zylindern (26A-26D) einschließt, wobei das Verfahren Folgendes umfasst:
Auswählen mindestens eines ersten Zylinders von der Vielzahl von Zylindern (26A-26D) und Ausführen des Verfahrens nach einem der Ansprüche 1 bis 11 für den mindestens einen ersten Zylinder; und
Auswählen mindestens eines zweiten Zylinders von der Vielzahl von Zylindern (26A-26D), der von dem mindestens einen ersten Zylinder verschieden ist, und Ausführen des Verfahrens nach einem der Ansprüche 1 bis 11 für den mindestens einen zweiten Zylinder nach dem Ausführen des Verfahrens für den mindestens einen ersten Zylinder,
vorzugsweise Wiederholen des Prozesses, bis alle Zylinder (26A-26D) geprüft wurden.

13. Verfahren nach einem der Ansprüche 1 bis 11, wobei der Verbrennungsmotor (10) eine Vielzahl von Zylindern (26A-26D) einschließt, wobei das Verfahren Folgendes umfasst:
gleichzeitiges Ausführen des Verfahrens nach einem der Ansprüche 1 bis 11 für die Vielzahl von Zylindern (26A-26D).

14. Verbrennungsmotor (10), umfassend:
einen Motorblock (20), der zumindest teilweise einen Zylinder (26) definiert;
eine Zündvorrichtung (90), die konfiguriert ist, um dem Zylinder (26) eine Voreinspritzung von Flüssigkraftstoff zuzuführen, um eine Zündung eines Gemisches von gasförmigem Kraftstoff und Luft in einer Brennkammer (16) des Zylinders (26) zu bewirken;
ein Zylinderdrucksensorsystem, das zum Erfassen eines Zylinderdrucks im Zylinder (26) konfiguriert ist; und
eine Steuereinheit (50), die konfiguriert ist zum:
Betreiben des Verbrennungsmotors (10) mit einem ersten Voreinspritzzeitpunkt (t₁) der Zündvorrichtung (90), wobei der Einspritzzeitpunkt der Zeitpunkt des Einspritzbeginns des Vorkraftstoffs durch die Zündvorrichtung (90) ist;
Verzögern des Voreinspritzzeitpunkts, um den Verbrennungsmotor (10) mit einem zweiten Voreinspritzzeitpunkt (t₂) der Zündvorrichtung (90) zu betreiben, der später als der erste Voreinspritzzeitpunkt ist;
Messen mindestens eines Verbrennungsparameters während des Betriebs mit dem zweiten Voreinspritzzeitpunkt, wobei der mindestens eine Verbrennungsparameter basierend auf Messungen erhalten wird, die mit dem Zylinderdrucksensorsystem ausgeführt werden, und mindestens eines der Folgenden ist: ein Verbrennungsbeginn im Zylinder (26), ein Spitzenzünddruck im Zylinder (26), eine Verbrennungsdauer und ein Zylinderdruck, der zu einem vorbestimmten Zeitpunkt vor oder nach einem Haupteinspritzzeitpunkt gemessen wird;
Verfrühen des Voreinspritzzeitpunkts, um den Verbrennungsmotor (10) mit einem dritten Voreinspritzzeitpunkt (t₃) der Zündvorrichtung (90) zu betreiben, der früher als der erste Voreinspritzzeitpunkt ist;
Messen des mindestens einen Verbrennungsparameters während des Betriebs mit dem dritten Voreinspritzzeitpunkt;
Vergleichen des Messwerts des mindestens einen Verbrennungsparameters für den zweiten Voreinspritzzeitpunkt (t₂) mit dem Messwert des mindestens einen Verbrennungsparameters für den dritten Voreinspritzzeitpunkt (t₃); und
Bestimmen, ob die Zündvorrichtung (90) basierend auf dem Vergleich funktionsfähig ist.

15. Computerprogramm, das computerausführbare Anweisungen umfasst, die, wenn sie auf einem Computer ausgeführt werden, den Computer veranlassen, die Schritte des Verfahrens nach einem der Ansprüche 1 bis 13 auszuführen.

## Revendications

1. Procédé de test d'un dispositif d'allumage (90) associé à un cylindre (26) d'un moteur à combustion interne (10), le dispositif d'allumage (90) étant configuré pour fournir une injection pilote de carburant liquide au cylindre (26) pour provoquer un allumage d'un mélange de carburant gazeux et d'air dans une chambre de combustion (16) du cylindre (26), le procédé comprenant :
un actionnement du moteur à combustion interne (10) avec un premier point d'injection pilote (t₁) du dispositif d'allumage (90), le point d'injection étant l'instant du début d'injection du carburant pilote par le dispositif d'allumage (90) ;
un retardement du point d'injection pilote pour actionner le moteur à combustion interne (10) avec un deuxième point d'injection pilote (t₂) du dispositif d'allumage (90) qui est plus tard que le premier point d'injection pilote ;
une mesure d'au moins un paramètre de combustion tout en fonctionnant avec le deuxième point d'injection pilote, l'au moins un paramètre de combustion étant obtenu sur la base de mesures effectuées avec un système de capteur de pression de cylindre prévu pour le moteur et étant au moins l'un : d'un début de combustion dans le cylindre (26), d'une pression de déclenchement maximale dans le cylindre (26), d'une durée de combustion et d'une pression de cylindre mesurées à un instant prédéterminé avant ou après un point d'injection principal ;
un avancement du point d'injection pilote pour faire fonctionner le moteur à combustion interne (10) avec un troisième point d'injection pilote (t₃) du dispositif d'allumage (90) qui est antérieur au premier point d'injection pilote ;
une mesure de l'au moins un paramètre de combustion tout en fonctionnant avec le troisième point d'injection pilote ;
une comparaison de la mesure de l'au moins un paramètre de combustion pour le deuxième point d'injection pilote (t₂) avec la mesure de l'au moins un paramètre de combustion pour le troisième point d'injection pilote (t₃) ; et
une détermination du fait que le dispositif d'allumage (90) est fonctionnel en fonction de la comparaison.

2. Procédé selon la revendication 1, dans lequel le moteur à combustion interne (10) est un moteur à double combustible configuré pour fonctionner en mode à gaz et en mode à carburant liquide, le procédé comprenant :
un actionnement du moteur à combustion interne (10) avec les premier à troisième points d'injection pilote du dispositif d'allumage (90) dans le mode à carburant liquide ; et
une commutation vers le mode à gaz lorsqu'il est déterminé que le dispositif d'allumage (90) est fonctionnel.

3. Procédé selon la revendication 2, dans lequel le deuxième point d'injection (t₂) est un point d'injection qui est plus tard qu'un point d'injection d'une injection principale de carburant liquide lorsque le moteur à combustion interne (10) fonctionne dans le mode à carburant liquide.

4. Procédé selon la revendication 3, dans lequel le deuxième point d'injection (t₂) est entre environ 0,1° et 40° d'angle de vilebrequin après la synchronisation de l'injection principale de carburant liquide, de préférence entre environ 1° et 10° d'angle de vilebrequin après la synchronisation de l'injection principale de carburant liquide.

5. Procédé selon l'une quelconque des revendications 2 à 4, dans lequel le troisième point d'injection (t₃) est un point d'injection qui est antérieur à un point d'injection d'une injection principale de carburant liquide lorsque le moteur à combustion interne (10) fonctionne dans le mode à carburant liquide.

6. Procédé selon la revendication 5, dans lequel le troisième point d'injection (t₃) est entre environ 0,1° et 40° d'angle de vilebrequin avant la synchronisation de l'injection principale de carburant liquide, de préférence entre environ 2° et 10° d'angle de vilebrequin avant la synchronisation de l'injection principale de carburant liquide.

7. Procédé selon la revendication 1, dans lequel le moteur à combustion interne (10) est un moteur à gaz configuré pour fonctionner avec une injection pilote de carburant liquide, par exemple du carburant diesel, le procédé comprenant :
une réalisation des étapes du procédé selon la revendication 1 au début d'un démarrage du moteur (10) avant d'activer une alimentation en gaz de celui-ci.

8. Procédé selon l'une quelconque des revendications 1 à 7,
dans lequel le deuxième point d'injection (t₂) est entre environ 0° et 40° d'angle de vilebrequin après le premier point d'injection, de préférence entre environ 1° et 10° d'angle de vilebrequin après le premier point d'injection, et/ou
dans lequel le troisième point d'injection (t₃) est entre environ 0,1° et 40° d'angle de vilebrequin avant le premier point d'injection, de préférence entre environ 1° et 5° d'angle de vilebrequin avant le premier point d'injection.

9. Procédé selon l'une quelconque des revendications 1 à 8, comprenant en outre :
une augmentation de la quantité de carburant liquide pilote injecté, de préférence jusqu'à une capacité maximale du dispositif d'allumage (90), lorsque le moteur à combustion interne (10) fonctionne avec le troisième point d'injection (t₃).

10. Procédé selon l'une quelconque des revendications 1 à 9, comprenant en outre :
une détermination d'un changement d'un niveau dudit au moins un paramètre de combustion mesuré ; et
une détermination du fait que le dispositif d'allumage (90) est fonctionnel lorsqu'une valeur absolue du changement est supérieure à un premier seuil, est comprise entre un deuxième seuil et un troisième seuil, et/ou diffère de moins d'une quantité prédéterminée d'une valeur attendue du changement obtenu à l'avance pour des paramètres de fonctionnement spécifiques du moteur (10) et/ou d'un type spécifique de dispositif d'injection (90).

11. Procédé selon l'une quelconque des revendications 1 à 10, dans lequel l'au moins un paramètre de combustion mesuré est mesuré sur une base cycle par cycle ou moyenné sur de multiples cycles.

12. Procédé selon l'une quelconque des revendications 1 à 11, dans lequel le moteur à combustion interne (10) inclut une pluralité de cylindres (26A à 26D), le procédé comprenant :
une sélection d'au moins un premier cylindre de la pluralité de cylindres (26A à 26D) et une mise en oeuvre du procédé selon l'une quelconque des revendications 1 à 11 pour l'au moins un premier cylindre ; et
une sélection d'au moins un deuxième cylindre de la pluralité de cylindres (26A à 26D) qui est différent de l'au moins un premier cylindre et une mise en oeuvre du procédé selon l'une quelconque des revendications 1 à 11 pour l'au moins un deuxième cylindre après une mise en oeuvre du procédé pour l'au moins un premier cylindre,
de préférence, une répétition du procédé jusqu'à ce que tous les cylindres (26A à 26D) aient été testés.

13. Procédé selon l'une quelconque des revendications 1 à 11, dans lequel le moteur à combustion interne (10) inclut une pluralité de cylindres (26A à 26D), le procédé comprenant :
une mise en oeuvre simultanée du procédé selon l'une quelconque des revendications 1 à 11 pour la pluralité de cylindres (26A à 26D).

14. Moteur à combustion interne (10), comprenant :
un bloc moteur (20) définissant au moins en partie un cylindre (26) ;
un dispositif d'allumage (90) configuré pour fournir une injection pilote de carburant liquide au cylindre (26) pour provoquer un allumage d'un mélange de carburant gazeux et d'air dans une chambre de combustion (16) du cylindre (26) ;
un système de capteur de pression de cylindre configuré pour détecter une pression de cylindre dans le cylindre (26) ; et
une unité de commande (50) configurée pour :
actionner le moteur à combustion interne (10) avec un premier point d'injection pilote (t₁) du dispositif d'allumage (90), le point d'injection étant l'instant du début d'injection du carburant pilote par le dispositif d'allumage (90) ;
retarder le point d'injection pilote pour actionner le moteur à combustion interne (10) avec un deuxième point d'injection pilote (t₂) du dispositif d'allumage (90) qui est plus tard que le premier point d'injection pilote ;
mesurer au moins un paramètre de combustion tout en fonctionnant avec le deuxième point d'injection pilote, l'au moins un paramètre de combustion étant obtenu sur la base de mesures effectuées avec le système de capteur de pression de cylindre et étant au moins l'un : d'un début de combustion dans le cylindre (26), d'une pression de déclenchement maximale dans le cylindre (26), d'une durée de combustion et d'une pression de cylindre mesurées à un instant prédéterminé avant ou après un point d'injection principal ;
avancer le point d'injection pilote pour faire fonctionner le moteur à combustion interne (10) avec un troisième point d'injection pilote (t₃) du dispositif d'allumage (90) qui est antérieur au premier point d'injection pilote ;
mesurer l'au moins un paramètre de combustion tout en fonctionnant avec le troisième point d'injection pilote ;
comparer la mesure de l'au moins un paramètre de combustion pour le deuxième point d'injection pilote (t₂) avec la mesure de l'au moins un paramètre de combustion pour le troisième point d'injection pilote (t₃) ; et
déterminer le fait que le dispositif d'allumage (90) est fonctionnel en fonction de la comparaison.

15. Programme informatique comprenant des instructions exécutables par ordinateur qui, lorsqu'elles sont exécutées sur un ordinateur, amènent l'ordinateur à réaliser les étapes du procédé selon l'une quelconque des revendications 1 à 13.
